# EUROPEAN PATENT APPLICATION

(11) **EP 3 495 635 A1**
(43) Date of publication of application: **12.06.2019**
(21) Application number: 18197953.5
(22) Date of filing: 01.10.2018
(51) Int. Cl.: F01N 3/20, F01N 3/28

(54) **EXHAUST GAS CATALYST FOR INTERNAL COMBUSTION ENGINES**

(30) Priority: 07.12.2017 JP 2017235077
(71) Applicant: TOYOTA JIDOSHA KABUSHIKI KAISHA, Toyota-shi, Aichi-ken, 471-8571 (JP)
(72) Inventor: OTSUKI, Hiroshi, Aichi-ken, 471-8571 (JP); IKEDA, Shinji, Aichi-ken, 471-8571 (JP); TAKADA, Keishi, Aichi-ken, 471-8571 (JP); SAKUMA, Tetsuya, Aichi-ken, 471-8571 (JP); ISHIKAWA, Norio, Aichi-ken, 471-8571 (JP)
(74) Representative: D Young & Co LLP

(57) **Abstract**

An exhaust gas catalyst includes: catalyst particles (24) that clean exhaust gas; and magnetic particles (26) that are placed around the catalyst particles and that generate heat upon absorption of microwaves. Each of the magnetic particles includes: a core portion (26a) composed of a ferromagnetic material capable of generating heat upon absorption of microwaves; and a shell portion (26b) coating a surface of the core portion, the shell portion having a property of permitting passage of microwaves, the shell portion being superior to γ-alumina or θ-alumina in a property of blocking gases.

## Description

### BACKGROUND OF THE INVENTION

### 1. Field of the Invention

The present invention relates to exhaust gas catalysts for an internal combustion engine.

### 2. Description of Related Art

Japanese Patent Application Publication No. 2016-187766 discloses a catalyst for cleaning exhaust gas that is capable of generating heat upon absorption of microwaves. This exhaust gas catalyst includes a ferrite and a catalyst layer coating a surface of the ferrite. The ferrite is a magnetic material having a property of generating heat upon absorption of microwaves and autonomously stopping the heat generation once the temperature of the material reaches the Curie temperature. The catalyst layer is composed of a catalyst metal and a support layer supporting the catalyst metal. The catalyst metal is at least one of platinum (Pt), palladium (Pd), and rhodium (Rh). The support layer is composed of γ-alumina or θ-alumina. When microwaves are applied to the exhaust gas catalyst, the microwaves pass through the catalyst layer and are then absorbed by the ferrite. The heat generation of the ferrite causes an increase in the temperature of the whole exhaust gas catalyst.

### SUMMARY OF THE INVENTION

Ferrites are generally composed of a multivalent element, and the valence of the element is readily changed due to variation in exhaust gas conditions. Specifically, under high-temperature conditions, magnetic materials undergo a phase change. The occurrence of a phase change of a ferrite means a change in the crystal structure of the ferrite. Under a condition in which an air-fuel ratio is in a range from a stoichiometric air-fuel ratio to a rich air-fuel ratio and a temperature is high, ferrites further undergo a chemical change. The occurrence of a chemical change of a ferrite means a change in the molecular structure of the ferrite. Under the condition in which the air-fuel ratio is in the range from the stoichiometric air-fuel ratio to the rich air-fuel ratio and the temperature is high, therefore, ferrites may undergo an irreversible change in the crystal structure or molecular structure and eventually deteriorate. By contrast, under a condition in which an air-fuel ratio is lean, change in the molecular structure of ferrites is slight. However, ferrites may be poisoned and deteriorated by a sulfur component or phosphorus component contained in the exhaust gas.

In view of such deterioration of ferrites, the surface of the ferrite of the exhaust gas catalyst described above is coated with the catalyst layer (i.e., the support layer). However, γ-alumina and θ-alumina, either of which composes the support layer, have a high specific surface area. The high specific surface area implies the possibility that pores with a volume large enough to allow gas passage are present within these alumina. The presence of pores with such a volume causes exhaust gas around the exhaust gas catalyst to easily pass through the support layer to reach the ferrite. Thus, the occurrence of the above-described deterioration of the ferrite cannot be avoided, with the result that warm-up effect based on the microwave absorption property may be lost relatively early.

The present invention has been made in view of the above problems and provides an exhaust gas catalyst that enables warm-up exploiting microwaves and that has high resistance to variation in exhaust gas conditions.

An aspect of the present invention relates to an exhaust gas catalyst for an internal combustion engine, the exhaust gas catalyst including: catalyst particles that clean exhaust gas of the internal combustion engine; and magnetic particles that are placed around the catalyst particles and that generate heat upon absorption of microwaves, wherein each of the magnetic particles includes: a core portion composed of a ferromagnetic material capable of generating heat upon absorption of microwaves; and a shell portion coating a surface of the core portion, the shell portion having a property of permitting passage of microwaves, the shell portion being superior to γ-alumina or θ-alumina in a property of blocking gases.

In the above aspect, the shell portion may be composed of at least one material of: i) silicon nitride; ii) aluminum nitride; iii) manganese oxide; iv) α-alumina; and v) silica.

In the above aspect, the shell portion may be composed of at least one material of: i) α-alumina; and ii) silica.

In the above aspect, a BET specific surface area of the shell portion may be less than 180 m²/g.

In the above aspect, a BET specific surface area of the shell portion may be less than 105 m²/g.

In the above aspect, a pore volume of the shell portion may be less than 0.7 cm²/g.

In the above aspect, a pore volume of the shell portion may be less than 0.6 cm²/g.

In the above aspect, the ferromagnetic material may include at least one material of: i) ferromagnetic oxide; ii) a ferromagnetic metal; and iii) a hexagonal ferrite.

In the above aspect, the catalyst particles may include at least one material of: i) γ-alumina; ii) θ-alumina; and iii) zirconia.

According to the present invention, magnetic particles each including a core portion composed of a ferromagnetic material and a shell portion coating the core portion are placed around catalyst particles. This shell portion has a property of permitting passage of microwaves. Thus, the temperature of the catalyst particles can be increased by heat generation of the core portion absorbing microwaves. Additionally, the shell portion is composed of silicon nitride, aluminum nitride, manganese oxide, α-alumina, or silica which is superior to γ-alumina or θ-alumina in a property of blocking gases. Thus, gas communication between the core portion and the outside environment can be decreased as compared to when a shell portion is composed of γ-alumina or θ-alumina. That is, entry of gas into the core portion from the outside environment and exit of gas from the core portion to the outside environment can be reduced. This can lead to an increase in the resistance of the magnetic particles to variation in exhaust gas conditions.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 illustrates the outline of an exhaust gas control system for an internal combustion engine, the exhaust gas control system employing an exhaust gas catalyst according to the present invention;
FIG. 2 illustrates the outline of the configuration of the exhaust gas catalyst according to the present invention;
FIG. 3 illustrates the structure of a magnetic particle;
FIG. 4 shows an example of the relationship between microwave irradiation time and the temperature of an irradiated material;
FIG. 5 is a phase diagram of iron oxides;
FIG. 6 shows examples of the BET specific surface areas and pore volumes of γ-alumina, θ-alumina, α-alumina, and silica;
FIG. 7 illustrates a first method for obtaining the exhaust gas catalyst according to the present invention;
FIG. 8 shows an example of the relationship between the ζ potentials of raw materials for the exhaust gas catalyst and the pH of an aqueous solution;
FIG. 9 illustrates a second method for obtaining the exhaust gas catalyst according to the present invention;
FIG. 10 illustrates a third method for obtaining the exhaust gas catalyst according to the present invention;
FIG. 11 shows an example of the relationship between the ζ potentials of raw materials for the exhaust gas catalyst and the pH of an aqueous solution; and
FIG. 12 illustrates a fourth method for obtaining the exhaust gas catalyst according to the present invention.

### DETAILED DESCRIPTION OF EMBODIMENTS

Hereinafter, embodiments of the present invention will be described with reference to the drawings. The same or equivalent components are denoted by the same reference signs in the figures, and the description of the components may be simplified or omitted.

### 1. Outline of Exhaust Gas Control System

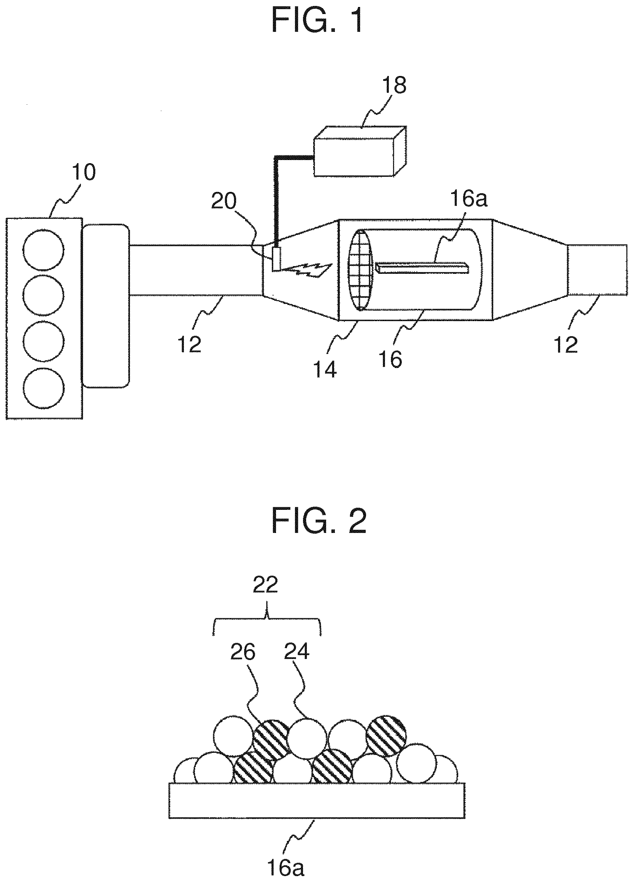

FIG. 1 illustrates the outline of an exhaust gas control system for an internal combustion engine (which may be simply referred to as an "engine" hereinafter), the exhaust gas control system employing an exhaust gas catalyst according to the present invention. The exhaust gas control system shown in FIG. 1 includes an engine 10. The engine 10 is, for example, a straight-four engine. An exhaust pipe 12 is connected to the engine 10. In the middle of the exhaust pipe 12, a catalytic converter 14 is provided. A honeycomb substrate 16 is provided inside the catalytic converter 14. The honeycomb substrate 16 is composed of, for example, cordierite (MgO-Al₂O₃-SiO₂-based ceramic) or silicon carbide (SiC) or silicon nitride (Si₃N₄) formed in a honeycomb shape. The exhaust gas catalyst is supported on the honeycomb substrate 16 (more precisely, on a rib 16a of the honeycomb substrate 16).

An antenna 20 of a microwave oscillator 18 is provided upstream of the honeycomb substrate 16. The microwave oscillator 18 is configured to generate microwaves. The microwave oscillator 18 is, for example, a semiconductor oscillator. The microwave oscillator 18 may be configured with a magnetron, klystron, gyrotron, or the like. The antenna 20 is configured to emit microwaves toward the honeycomb substrate 16. The antenna 20 is, for example, a planar antenna, parabola antenna, or horn antenna. The frequency of the microwaves to be emitted is, for example, 2.45 GHz, 5.8 GHz, 24 GHz, or 915 MHz. The intensity of the microwaves to be emitted is not particularly limited.

The microwave oscillator 18 is driven in response to a predetermined control signal, for example, during cold start of the engine 10. Once the microwave oscillator 18 is driven, microwaves emitted from the antenna 20 are applied to (incident on) the honeycomb substrate 16. The exhaust gas catalyst supported on the rib 16a absorbs the microwaves to generate heat and become hot. The exhaust gas catalyst is activated once the temperature of the catalyst reaches a predetermined temperature range. Consequently, it becomes possible to clean exhaust gas passing through the honeycomb substrate 16.

### 2. Description of Exhaust gas catalyst according to Present Invention

### 2.1 Description of Configuration of Exhaust gas catalyst

FIG. 2 illustrates the outline of the configuration of the exhaust gas catalyst according to the present invention. As shown in FIG. 2, an exhaust gas catalyst 22 is supported on the rib 16a. The exhaust gas catalyst 22 includes catalyst particles 24 and magnetic particles 26. The catalyst particles 24 exhibit the function of reducing the amount of a particular component contained in exhaust gas when the temperature of the catalyst particles 24 is in the activation temperature range as mentioned above. The magnetic particles 26 have approximately the same particle size as the catalyst particles 24. The magnetic particles 26 have the function of absorbing microwaves to generate heat. Once the magnetic particles 26 generate heat upon absorption of microwaves, the resulting thermal energy is emitted to the surroundings of the particles. The catalyst particles 24 placed around the magnetic particles 26 receive the thermal energy to become hot.

The catalyst particles 24 are formed by supporting a noble metal such as platinum (Pt), palladium (Pd), or rhodium(Rh) on a porous ceramic. The porous ceramic is, for example, alumina (in particular γ-alumina or 0-alumina) or zirconia (ZrO₂). In the catalyst particles 24, cerium (Ce) may be further supported as an additive. Under a condition in which an air-fuel ratio is lean, cerium (Ce) is chemically combined with oxygen present in exhaust gas to form ceria (CeO₂), while under rich conditions, ceria (CeO₂) is partially reduced as a result of part of oxygen being released (2CeO₂→Ce₂O₃ + 1/2O₂). Due to the characteristics of cerium (Ce), the catalyst particles 24 adsorb oxygen from exhaust gas and store the oxygen under the condition in which the air-fuel ratio is lean. Under rich conditions, the catalyst particles 24 release the stored oxygen.

The feature of the exhaust gas catalyst 22 lies in the structure of the magnetic particles 26. Specifically, the magnetic particles 26 have a core-shell structure.

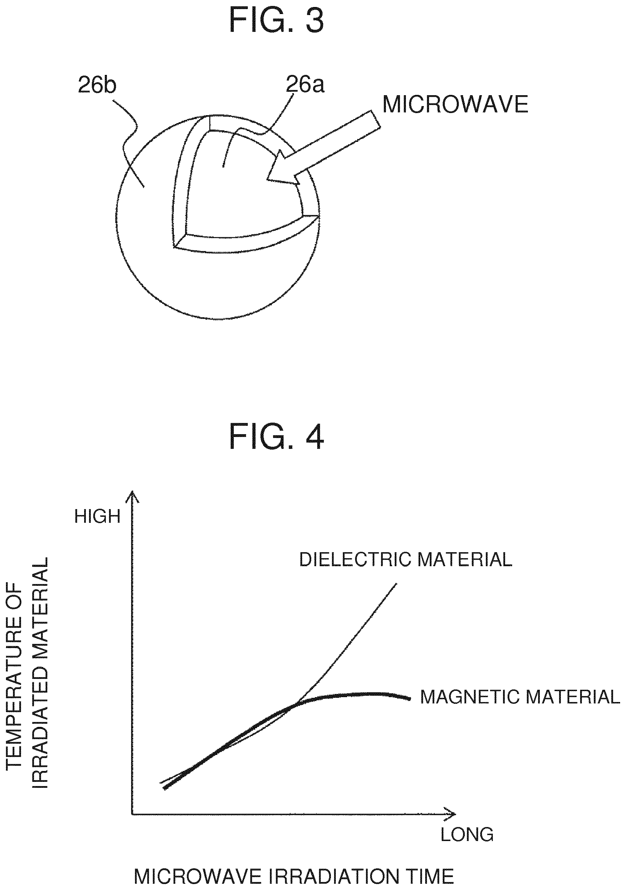

FIG. 3 illustrates the structure of the magnetic particle 26. The magnetic particle 26 shown in FIG. 3 includes a core portion 26a and a shell portion 26b. The core portion 26a is composed of a powder of a ferromagnetic material. The shell portion 26b is provided to coat a surface of the powder of the ferromagnetic material.

The ferromagnetic material composing the core portion 26a is a ferromagnetic oxide, a ferromagnetic metal, or a hexagonal ferrite. The ferromagnetic material may contain any one of these substances or may contain two or more of these substances. The ferromagnetic oxide is, for example, γ-Fe₂O₃, Fe₃O₄, FeOₓ(1≤ x ≤ 1.5), Co-FeOₓ (1 ≤ x ≤ 1.5), Co-Fe₃O₄, or CrO₂. The ferromagnetic metal is, for example, Fe, Fe-Co alloy, Fe-Pt, Fe₃-Pt, Co-Pt, Fe₄N, or Fe₅C₂. The outer surface of the ferromagnetic metal may include an oxide layer. The hexagonal ferrite is barium ferrite, strontium ferrite, lead ferrite, calcium ferrite, or a material resulting from substitution of any of these ferrites with Co or the like. More specific examples of the hexagonal ferrite include magnetoplumbite-type barium ferrite and strontium ferrite and magnetoplumbite-type barium ferrite and strontium ferrite partially containing a spinel phase.

The coating material composing the shell portion 26b is, for example, a ceramic such as silicon nitride (Si₃N₄), aluminum nitride (AlN), manganese oxide (Mn₃O₄), or α-alumina or silica (SiO₂). The coating material may contain any one of these substances or may contain two or more of these substances. These ceramics and silica have a property of permitting passage of microwaves and are superior to γ-alumina or θ-alumina in a property of blocking gases (gas barrier property). Thus, these ceramics and silica have a property of permitting passage of microwaves while blocking passage of gases such as exhaust gas to a greater extent than γ-alumina or θ-alumina. These ceramics and silica have heat resistance and heat conductivity in addition to the above property. α-alumina and silica have high producibility and high poisoning resistance in addition to the above properties. It can therefore be considered that α-alumina and silica are particularly preferred as the coating material composing the shell portion 26b.

### 2.2 Advantage and Disadvantage of Ferromagnetic Materials

Typical substances having the property of generating heat upon absorption of microwaves include dielectric materials and magnetic materials. Some dielectric materials have high durability. However, in the 2.45 GHz band which is the ISM band for microwaves, the wavelength of microwaves is around 12 cm, and there exist loops and nodes in microwave electric fields. Thus, it is difficult to cause a microwave electric field to act uniformly on a dielectric material. Additionally, dielectric materials have a property of becoming able to absorb microwaves to a greater extent with an increase in temperature. The use of a dielectric material is therefore likely to result in localization of the heat generating site, leading to uneven heating.

Magnetic materials have a property of ceasing to exhibit magnetism at a temperature equal to or higher than the Curie temperature. Thus, once the temperature of a magnetic material increases beyond the Curie temperature, the magnetic material becomes insensitive to the action of microwaves. FIG. 4 shows an example of the relationship between microwave irradiation time and the temperature of an irradiated material. When the irradiated material is a dielectric material, the temperature of the irradiated material increases with increasing irradiation time. When the irradiated material is a magnetic material, the temperature of the irradiated material converges toward a maximum temperature. This convergence temperature corresponds to the Curie temperature of the magnetic material. The Curie temperature can be adjusted depending on the material design of the magnetic material. Thus, when a magnetic material is designed to have a Curie temperature, the temperature of the whole magnetic material can be increased to the Curie temperature without uneven heating.

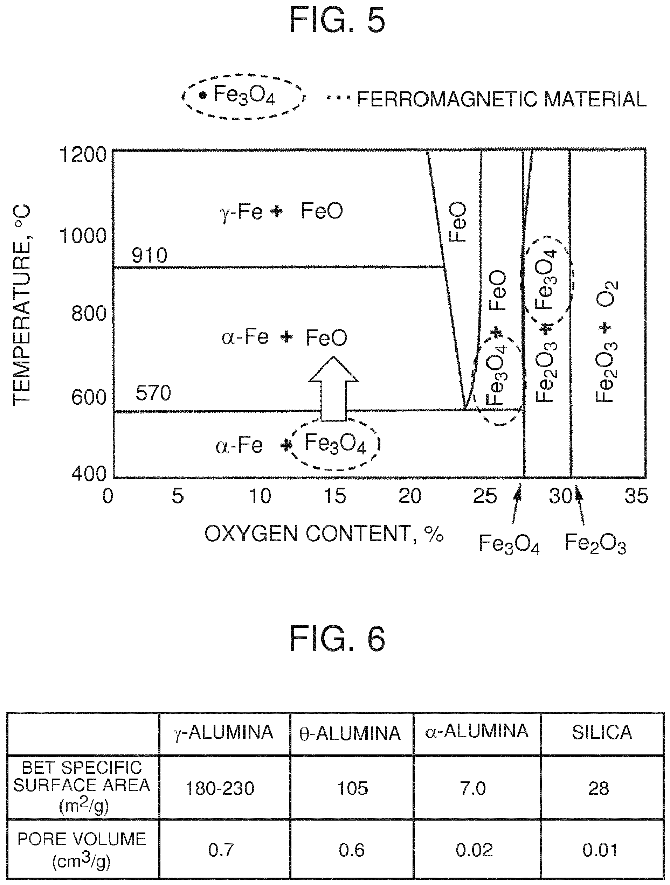

Furthermore, when a magnetic material is designed to have a Curie temperature within the activation temperature range mentioned above, not only the temperature of the magnetic material but also the temperature of a substance placed around the magnetic material can be increased to the Curie temperature. As previously stated, however, ferrites can deteriorate due to variation in exhaust gas conditions. This deterioration will be described with reference to FIG. 5. FIG. 5 is a phase diagram of iron oxides which are main components of ferrites. The abscissa of FIG. 5 represents the oxygen content in the iron oxides. The ordinate represents the temperature of the atmosphere surrounding the iron oxides. Among the three iron oxides shown in FIG. 5, iron(II, III) oxide (Fe₃O₄) exhibits the properties as a ferromagnetic material.

As indicated by an arrow in the center of FIG. 5, iron(II, III) oxide (Fe₃O₄) having an oxygen content of 20% or less undergoes a phase change into iron(II) oxide (FeO) once the temperature of the surrounding atmosphere rises beyond about 570°C. The occurrence of the phase change of iron(II, III) oxide (Fe₃O₄) entails a change in crystal structure. The change in crystal structure can occur when iron(II, III) oxide (Fe₃O₄) is exposed to high-temperature exhaust gas (such as exhaust gas at 1000°C or higher) from an engine. Under a condition in which an air-fuel ratio is in a range from a stoichiometric air-fuel ratio to a rich air-fuel ratio, iron(II, III) oxide (Fe₃O₄) undergoes a chemical change (more precisely, iron(II, III) oxide (Fe₃O₄) is subjected to a reducing action). The occurrence of the chemical change of iron(II, III) oxide (Fe₃O₄) entails a change in molecular structure. Thus, under a condition in which the air-fuel ratio is in the range from the stoichiometric air-fuel ratio to the rich air-fuel ratio and the temperature is high, a phase change and chemical change of iron(II, III) oxide (Fe₃O₄) occur concomitantly, so that iron(II, III) oxide (Fe₃O₄) can no longer exist. This results in the loss of the properties as a ferromagnetic material.

If a phase change into iron(II) oxide (FeO) occurs alone and then the temperature of the atmosphere surrounding iron(II) oxide (FeO) decreases, a phase change may occur in a direction opposite to the direction of the arrow shown in FIG. 5 to cause reconversion to iron(II, III) oxide (Fe₃O₄). However, when a phase change and chemical change of iron(II, III) oxide (Fe₃O₄) occur concomitantly, iron(II) oxide (FeO) is unlikely to be reconverted to iron(II, III) oxide (Fe₃O₄) even if the temperature of the atmosphere surrounding iron(II) oxide (FeO) decreases. This is because reconversion to iron(II, III) oxide (Fe₃O₄) is impossible at least unless under the condition in which the air-fuel ratio is lean (namely, unless oxygen exists around iron(II) oxide (FeO)). Thus, once iron(II, III) oxide (Fe₃O₄) is converted to iron(II) oxide (FeO) under the condition in which the air-fuel ratio is in the range from the stoichiometric air-fuel ratio to the rich air-fuel ratio and the temperature is high, it is difficult to restore the properties as a ferromagnetic material even if the temperature of the atmosphere surrounding iron(II) oxide (FeO) subsequently decreases.

Under the condition in which the air-fuel ratio is lean, iron(II, III) oxide (Fe₃O₄) is not subjected to any reducing action. Thus, under the condition in which the air-fuel ratio is lean, iron(II, III) oxide (Fe₃O₄) undergoes only a phase change, so that a subsequent decrease in the temperature of the surrounding atmosphere can cause a phase change of iron(II) oxide (FeO) into iron(II, III) oxide (Fe₃O₄). Under such a condition in which the air-fuel ratio is lean, however, iron(II, III) oxide (Fe₃O₄) may be poisoned by a sulfur component or phosphorus component contained in the exhaust gas. The poisoning will result in the loss of the properties as a ferromagnetic material.

Materials subject to influence on the above-described properties as a ferromagnetic material are not limited to iron(II, III) oxide (Fe₃O₄) or ferrites containing iron(II, III) oxide (Fe₃O₄) as a main component. For example, chromium(IV) oxide (CrO₂), which has the properties as a ferromagnetic material like iron(II, III) oxide (Fe₃O₄), can lose the properties as a ferromagnetic material by undergoing a phase change into chromium(III) oxide (Cr₂O₃). Additionally, under the condition in which the air-fuel ratio is in the range from the stoichiometric air-fuel ratio to the rich air-fuel ratio and the temperature is high, chromium(IV) oxide (CrO₂) is reduced and converted to chromium(III) oxide (Cr₂O₃). Thus, the ferromagnetic oxides and ferromagnetic metals as mentioned above have the same disadvantage as iron(II, III) oxide (Fe₃O₄) described with reference to FIG. 5.

### 2.3 Effects Provided by Configuration of Exhaust gas catalyst according to Present Invention

In the exhaust gas catalyst according to the present invention, the shell portion 26b is provided on a surface of a ferromagnetic material powder composing the core portion 26a. The coating material composing the shell portion 26b is superior to γ-alumina or θ-alumina in the property of blocking gases. FIG. 6 shows examples of the BET specific surface areas and pore volumes of γ-alumina, θ-alumina, α-alumina, and silica. As shown in FIG. 6, α-alumina and silica have a smaller BET specific surface area than γ-alumina and θ-alumina. More specifically, the BET specific surface areas of α-alumina and silica are about 1/10 of the BET specific surface area of γ-alumina. The pore volumes of α-alumina and silica are 1/30 or less of the pore volume of γ-alumina.

Having a small BET specific surface area and a small pore volume means being superior in the property of blocking gases. Being a coating material superior in the property of blocking gases means that the coating material, when used for the shell portion 26b, exhibits a high ability to inhibit gas communication between the core portion 26a and the outside environment. Thus, even under the condition in which the air-fuel ratio is in the range from the stoichiometric air-fuel ratio to the rich air-fuel ratio and the temperature is high, the influence of reducing components present in the exhaust gas can be diminished. Consequently, it is possible to decrease the extent to which the ferromagnetic material in the core portion 26a is subjected to a reducing action. In addition, under the condition in which the air-fuel ratio is lean, the influence of poisoning components present in the exhaust gas can be diminished.

Furthermore, even when the temperature of the atmosphere surrounding the magnetic particles 26 increases to induce a phase change which entails release of oxygen from the crystal structure composing the core portion 26a, the released oxygen can be retained inside the shell portion 26b. Thus, after a decrease in the temperature of the atmosphere surrounding the magnetic particles 26, the core portion 26a can incorporate the released oxygen into the crystal structure to regain the properties as a ferromagnetic material. For these reasons, the configuration of the exhaust gas catalyst according to the present invention can achieve an increased resistance of the magnetic particles 26 to variation in exhaust gas conditions. Consequently, the warm-up effect based on the microwave absorption property of the magnetic particles 26 can last for a long period of time.

### 3. Specific Methods for Obtaining Exhaust gas catalyst according to Present Invention

### 3.1 First Method

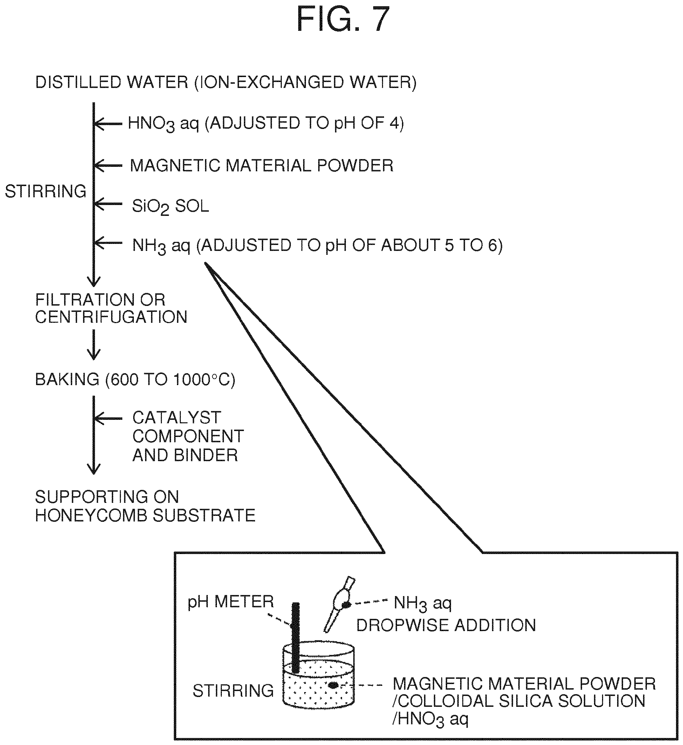

FIG. 7 illustrates a first method for obtaining the exhaust gas catalyst according to the present invention. In the method illustrated in FIG. 7, a surface of a ferromagnetic material is coated with silica. In the method illustrated in FIG. 7, first, an aqueous nitric acid solution is added to distilled water to adjust the pH of the aqueous solution to 4. Subsequently, a powder of a ferromagnetic material (e.g., a hexagonal ferrite) and a silica sol are added to the aqueous solution, which is stirred. Aqueous ammonia is then added to this aqueous solution to adjust the pH of the aqueous solution to 5 to 6. On the right side of FIG. 7 it is shown how to adjust the pH of the aqueous solution.

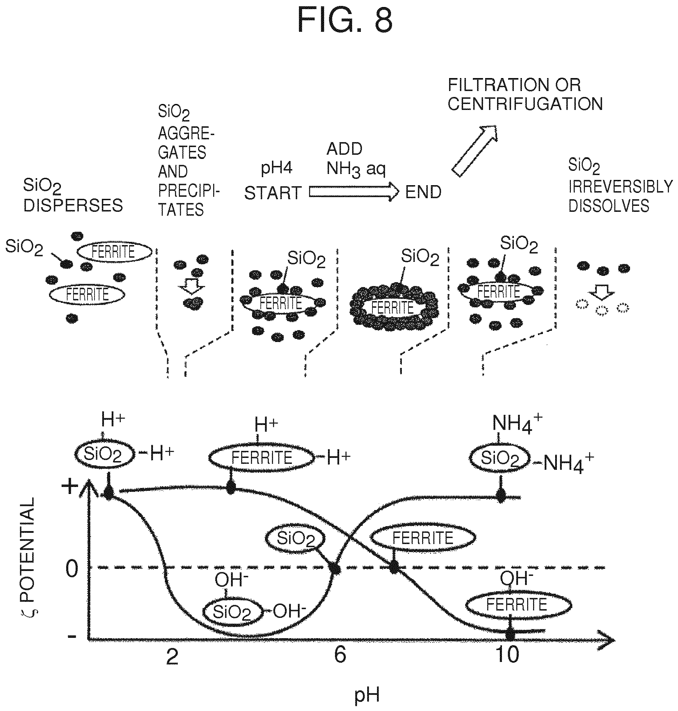

FIG. 8 shows an example of the relationship between the ζ potentials of the raw materials (the hexagonal ferrite and silica sol) and the pH of the aqueous solution. As shown in FIG. 8, upon the addition of the raw materials to the aqueous solution having a pH of about 4, the silica sol having a negative ζ potential is attracted to the ferrite having a positive ζ potential. The subsequent adjustment of the pH of the aqueous solution to 5 and 6 creates a state in which the silica sol is adsorbed on the surface of the ferrite. Magnetic particles of a desired size can be obtained by appropriately varying the particle size of the ferrite, the concentration of the silica sol, or the time spent for the adjustment of the pH to 5 and 6.

In the method illustrated in FIG. 7, the raw materials in the adsorption state as shown are collected by filtration or centrifugation. The raw materials collected by filtration or centrifugation are then baked. As a result, magnetic particles are obtained. Subsequently, catalyst particles (e.g., porous ceramic particles supporting a noble metal) adjusted to a desired size beforehand and a binder are mixed with the obtained magnetic particles to prepare a slurry. The slurry is then supported on a honeycomb substrate. In this manner, the exhaust gas catalyst according to the present invention is obtained.

### 3.2 Second Method

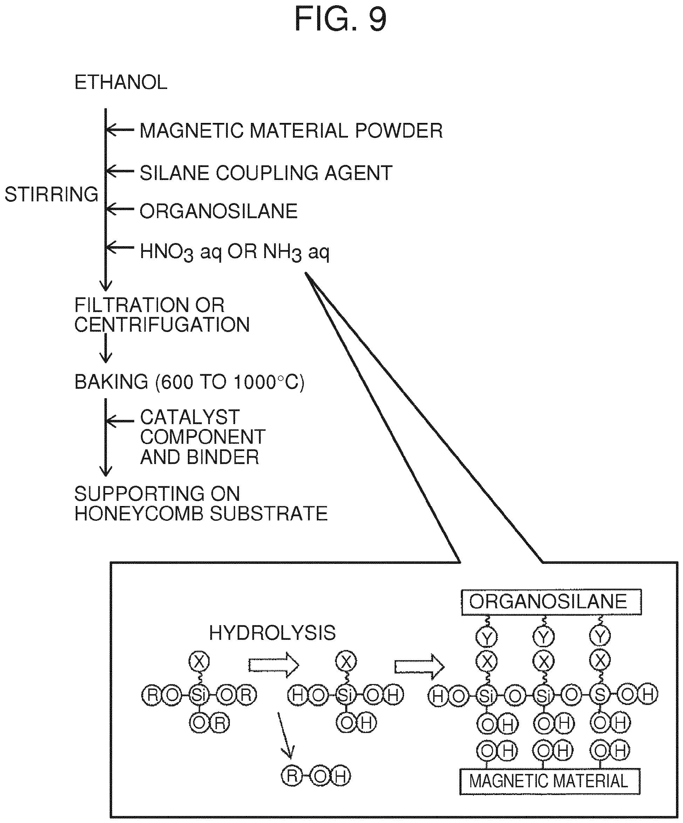

FIG. 9 illustrates a second method for obtaining the exhaust gas catalyst according to the present invention. In the method illustrated in FIG. 9, a surface of a ferromagnetic material is coated with silica. In the method illustrated in FIG. 9, first, a powder of a ferromagnetic material (e.g., a hexagonal ferrite), a silane coupling agent (e.g., vinyltriethoxysilane), and an organosilane (e.g., tetramethylsilane) are added to ethanol, and the mixture is stirred. To the resulting ethanol solution are then added an aqueous nitric acid solution or aqueous ammonia. This allows a hydrolysis reaction to take place so as to create a state in which silanol is adsorbed on the surface of the powder of the ferromagnetic material. On the right side of FIG. 9 is shown the outline of the process in which a silanol oligomer is finally adsorbed on the surface of the ferromagnetic material in a hydrogen-bonding fashion.

In the method illustrated in FIG. 9, the raw materials in the adsorption state as shown are collected by filtration or centrifugation. The raw materials collected by filtration or centrifugation are then baked to allow a dehydration condensation reaction of silanol to take place. As a result, magnetic particles are obtained. The procedures performed after the magnetic particles are obtained are the same as those in the method described with reference to FIG. 7. In this manner, the exhaust gas catalyst according to the present invention is obtained.

### 3.3 Third Method

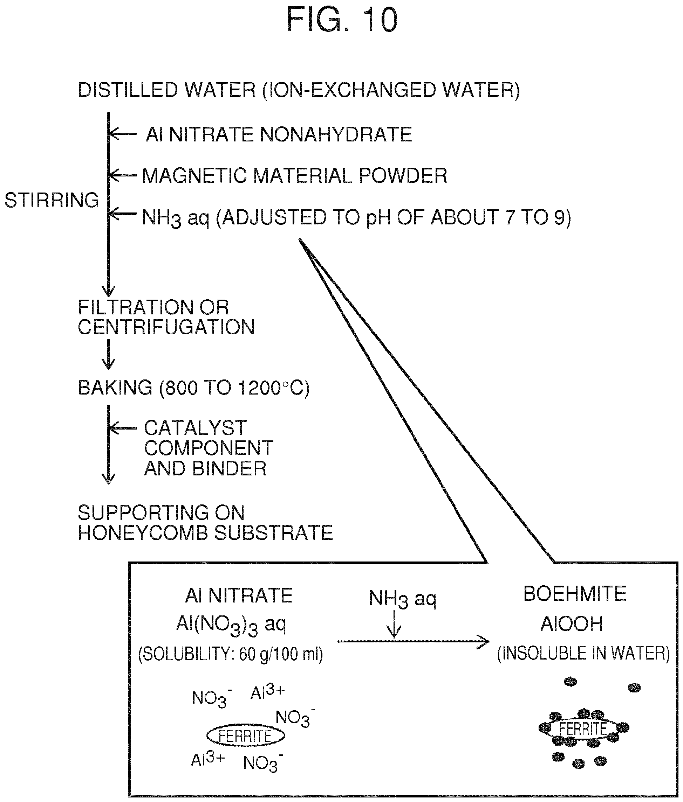

FIG. 10 illustrates a third method for obtaining the exhaust gas catalyst according to the present invention. In the method illustrated in FIG. 10, a surface of a ferromagnetic material is coated with α-alumina. In the method illustrated in FIG. 10, first, aluminum nitrate nonahydrate and a powder of a ferromagnetic material (e.g., a hexagonal ferrite) are added to distilled water, and the mixture is stirred. To the resulting aqueous solution is then added aqueous ammonia to adjust the pH of the aqueous solution to 7 to 9. On the right side of FIG. 10 it is shown how aluminum hydrate (boehmite) is precipitated as a result of the adjustment of the pH of the aqueous solution.

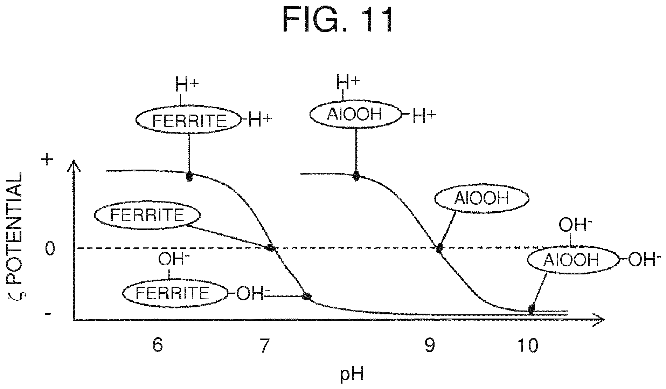

FIG. 11 shows an example of the relationship of the ζ potentials of the raw materials (the hexagonal ferrite and boehmite) and the pH of the aqueous solution. As shown in FIG. 11, the adjustment of the pH of the aqueous solution to 7 or higher results in formation of boehmite insoluble in the aqueous solution. The adjustment of the pH of the aqueous solution to 7 to 9 brings the ζ potential of the boehmite to a positive value and the ζ potential of the ferrite to a negative value. Consequently, the boehmite is attracted to the ferrite. On the right side of FIG. 10 is shown a state in which the boehmite is adsorbed on the surface of the ferrite.

In the method illustrated in FIG. 10, the raw materials in the adsorption state as shown are collected by filtration or centrifugation. The raw materials collected by filtration or centrifugation are then baked to allow a dehydration reaction of boehmite to take place. As a result, magnetic particles are obtained. The procedures performed after the magnetic particles are obtained are the same as those in the method described with reference to FIG. 7. In this manner, the exhaust gas catalyst according to the present invention is obtained.

### 3.4 Fourth Method

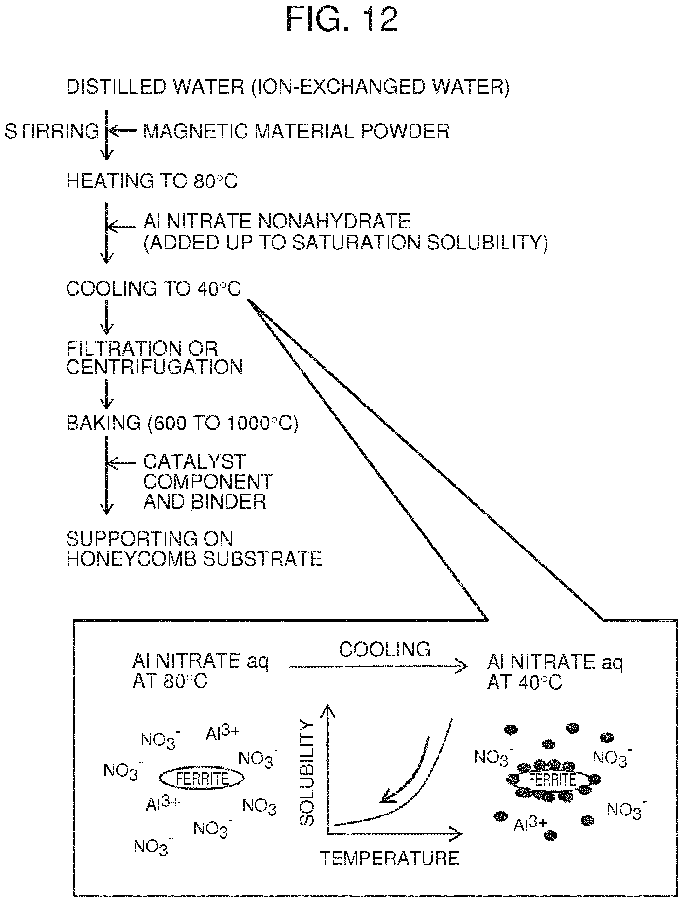

FIG. 12 illustrates a fourth method for obtaining the exhaust gas catalyst according to the present invention. In the method illustrated in FIG. 12, a surface of a ferromagnetic material is coated with α-alumina. In the method illustrated in FIG. 12, first, a powder of a ferromagnetic material (e.g., a hexagonal ferrite) is added to distilled water, and the mixture is stirred. Subsequently, the resulting aqueous solution is heated to 80°C. Once the temperature of the aqueous solution reaches 80°C, aluminum nitrate nonahydrate is added to the aqueous solution, which is stirred. The amount of aluminum nitrate nonahydrate added corresponds to the saturation solubility. Subsequently, the aqueous solution is cooled to 40°C. On the right side of FIG. 12 it is shown how aluminum hydrate is precipitated and adsorbed on the surface of the ferrite as a result of the decrease in temperature of the aqueous solution.

In the method illustrated in FIG. 12, the raw materials in the adsorption state as shown are collected by filtration or centrifugation. The raw materials collected by filtration or centrifugation are then baked to allow a dehydration reaction of the aluminum hydrate to take place. As a result, magnetic particles are obtained. The procedures performed after the magnetic particles are obtained are the same as those in the method described with reference to FIG. 7. In this manner, the exhaust gas catalyst according to the present invention is obtained.

Although numerical values indicating the number, numerical quantity, amount, or range may be presented for the elements of the foregoing embodiment, the present invention is not limited to the presented numerical values unless otherwise explicitly stated or unless it is clear that the numerical values should be employed in principle. The structures etc. described for the foregoing embodiment are not necessarily essential for the invention unless otherwise explicitly stated or unless it is clear that such structures etc. should be employed in principle.

## Claims

1. An exhaust gas catalyst for an internal combustion engine, comprising:
catalyst particles (24) that clean exhaust gas of the internal combustion engine; and
magnetic particles (26) that are placed around the catalyst particles and that generate heat upon absorption of microwaves, wherein each of the magnetic particles includes:
a core portion (26a) composed of a ferromagnetic material capable of generating heat upon absorption of microwaves; and
a shell portion (26b) coating a surface of the core portion, the shell portion having a property of permitting passage of microwaves, the shell portion being superior to γ-alumina or θ-alumina in a property of blocking gases.

2. The exhaust gas catalyst according to claim 1, wherein the shell portion (26b) is composed of at least one material of: i) silicon nitride; ii) aluminum nitride; iii) manganese oxide; iv) α-alumina; and v) silica.

3. The exhaust gas catalyst according to claim 1, wherein the shell portion (26b) is composed of at least one material of: i) α-alumina; and ii) silica.

4. The exhaust gas catalyst according to any one of claims 1 to 3, wherein a BET specific surface area of the shell portion (26b) is less than 180 m²/g.

5. The exhaust gas catalyst according to any one of claims 1 to 3, wherein a BET specific surface area of the shell portion (26b) is less than 105 m²/g.

6. The exhaust gas catalyst according to any one of claims 1 to 5, wherein a pore volume of the shell portion (26b) is less than 0.7 cm²/g.

7. The exhaust gas catalyst according to any one of claims 1 to 5, wherein a pore volume of the shell portion (26b) is less than 0.6 cm²/g.

8. The exhaust gas catalyst according to any one of claims 1 to 7, wherein the ferromagnetic material includes at least one material of: i) ferromagnetic oxide; ii) a ferromagnetic metal; and iii) a hexagonal ferrite.

9. The exhaust gas catalyst according to any one of claims 1 to 8, wherein the catalyst particles (24) include at least one material of: i) γ-alumina; ii) θ-alumina; and iii) zirconia.
